# NEUE EUROPÄISCHE PATENTSCHRIFT

(11) **EP 2 165 749 B2**
(45) Veröffentlichungstag und Bekanntmachung des Hinweises auf die Entscheidung über den Einspruch: **21.01.2015**
(45) Hinweis auf die Patenterteilung: 09.11.2011
(21) Anmeldenummer: 09011658.3
(22) Anmeldetag: 11.09.2009
(51) Int. Cl.: B01D 35/02, B01D 46/02, B01D 46/00

(54) **Filter für flüssige und gasförmige Medien**
Filter for liquids and gases
Filtre pour milieux liquides et gazeux

(30) Priorität: 15.09.2008 DE 202008012284 U
(43) Veröffentlichungstag der Anmeldung: 24.03.2010
(73) Patentinhaber: Karl Küfner KG, 72461 Albstadt (DE)
(72) Erfinder: Roland Knittel, 72458 Albstadt (DE)
(74) Vertreter: Geitz Truckenmüller Lucht

(56) Entgegenhaltungen:
- DE-A1- 10 052 166
- US-A- 4 169 795

## Beschreibung

### Stand der Technik

Die vorliegende Erfindung betrifft ein Filter für flüssige und gasförmige Medien mit einem Stützkörper und mindestens einem an dem Stützkörper angeordneten Filterelement aus einem Filtermaterial, welches kleine Filterelementöffnungen zum Durchströmen des Mediums aufweist.

Derartige Filter werden in einen zylindrischen Hohlkörper, beispielsweise ein Rohr oder in eine Bohrung eingesetzt. Sie dienen der Filtration von durch den Hohlkörper oder die Bohrung strömenden Flüssigkeiten und Gasen wie zum Beispiel Kraftstoff, Hydrauliköl, Wasser, Kunststoffschmelze oder Luft. Die Filter halten Feststoffe und sonstige Verunreinigungen zurück und schützen damit Bauelemente, die von dem flüssigen oder gasförmigen Medium durchströmt werden, vor einer Beeinträchtigung oder Beschädigung.

Bekannte derartige Filter bestehen aus einem Stützkörper mit einem Rahmen, der der Befestigung des Filters in einem zylindrischen Hohlkörper dient, mit mehreren an dem Rahmen angeordneten Stützelementen und mit einem an den dem Rahmen abgewandten Enden der Stützelemente angeordneten Boden. Alle Elemente des Stützkörpers, Rahmen, Stützelemente und Boden, sind aus einem für das Medium undurchlässigen und formstabilen Material, beispielsweise aus Kunststoff hergestellt. Zwischen dem Rahmen, den Stützelementen und dem Boden sind ein oder mehrere Filterelemente aus einem Filtermaterial angeordnet. Der Stützkörper sorgt dafür, dass die Form des Filters während des Filtrationsprozesses erhalten bleibt und verleiht dem Filter die notwendige Stabilität. Insbesondere stützt der Stützkörper das Filterelement und verhindert, dass es in sich zusammenfällt. In dem Rahmen des Stützkörpers ist eine zentrale Öffnung vorgesehen, durch die das Medium in den Filter einströmt. Durch die in dem Filterelement enthaltenen Filterelementöffnungen strömt es wieder aus. Eine Durchströmung des Filters ist jedoch auch in umgekehrter Strömungsrichtung möglich.

Als nachteilig erweist sich bei derartigen bekannten Filtern, dass der für das Medium undurchlässige Boden des Filters den Strömungsquerschnitt des Hohlkörpers, in den der Filter eingesetzt ist, stark reduziert. Bei einem zylindrischen Hohlkörper entsteht zwischen dem Boden des Filters und der innenwand des Hohlkörpers ein Ringspalt, den das Medium nach dem Durchströmen des Filters passieren muss. Dies führt zu einem hohen Strömungswiderstand und einem unerwünschten Druckverlust an dem Filter.

Aus der DE 100 52 166 A1 ist für ein Filter für einen Ölreiniger bekannt. Der Filter hat die Gestalt eines kreisförmigen Konus oder des Stumpfes eines kreisförmigen Konus. Als Filterelement sind zwei Kunstharzgitterbögen vorgesehen, die an ihren Außenkanten miteinander verbunden sind. Das Filterelement bildet damit einen Sack oder Strumpf, der durch einen Rahmen in seiner Form gehalten und in einem Reinigerkörper angeordnet wird. Der Rahmen des Filters weist einen ringförmigen Rahmenhalter auf, mit dem sich der Filter an der Innenwand eines Reinigerkörpers abstützt, und einen oder mehrere U-förmige Bügel. Die Bügel sind mit beiden Enden mit dem Rahmenhalter verbunden. Ihr Scheitel fällt mit dem Scheitel des Filterelements zusammen. Die Bügel sind notwendig, um das aus zwei Kunstharzaitterböaen zusammengesetzte oder gefaltete Filterelement zu halten. Dabei verläuft zumindest einer der Bügel entlang des Saums des Filterelements. Es ist daher ferner notwendig, dass sich der oder die Bügel entlang des im Scheitel des Filters befindlichen Bodens erstrecken um die notwendige Stabilität des Filters zu garantieren. Als Nachteil erweist sich bei dem Filter, dass der durch den Boden des Filters verlaufende, für das strömende Medium undurchlässige Rahmen den Strömungsguerschnitt des Filters reduziert. Ferner ist die Herstellung des Filters aufwändig, da das Filterelement aus mehreren Kunstharzgitterböaen zusammengesetzt werden muss, und der Saum des Filterelements durch den Rahmen des Filters abgestützt werden muss.

Der Erfindung liegt die Aufgabe zugrunde, einen Filter für flüssige und gasförmige Medien zur Verfügung zu stellen, bei dem der Druckverlust gegenüber bekannten Filtern reduziert ist.

### Die Erfindung und ihre Vorteile

Diese Aufgabe wird durch ein Filter mit den Merkmalen des Anspruchs 1 gelöst. Der erfindungsgemäße Filter besitzt einen Stützkörper mit einem Rahmen und zwei an dem Rahmen angeordneten Stützelementen, die sich in Längsrichtung des Stützkörpers erstrecken. Das Filterelement ist an dem Rahmen und den Stützelementen angeordnet. Der Stützkörper weist keinen für das Medium undurchlässigen Boden auf. Vielmehr besteht der Boden aus dem für das Medium durchlässigen Filterelement, welches durch die beiden Stützelemente gehalten wird. Die notwendige Stabilität erhält der Filter durch die beiden Stützelemente, die breiter und gegebenenfalls auch dicker ausgebildet sind als bei bekannten Filtern. Das Filterelement erstreckt sich vorteilhafterweise als durchgängiger Streifen von dem Rahmen entlang den Seiten der Stützelemente bis zu dem dem Rahmen abgewandten Ende der Stützelemente und auf der anderen Seite der Stützelement wieder zurück bis zum Rahmen. Anstelle eines durchgängigen Streifens können auch mehrere Filterelemente vorgesehen sein. Dadurch ergibt sich ein Querschnitt des Filters in den zur Längsrichtung des Filters senkrechten Ebenen, der durch vier Seiten begrenzt wird. Zwei der einander gegenüberliegenden Seiten werden durch die Stützelemente gebildet und die beiden anderen einander gegenüberliegenden Seiten durch das Filterelement. Stützelemente und Filterelement können so geformt sein, dass die vier Seiten einen geradlinigen Verlauf aufweisen. In diesem Fall ist der Querschnitt viereckig. Die den Querschnitt begrenzenden Seiten können aber auch nach außen gewölbt sein. Durch die Wölbung nach außen wird das durch den Filter begrenzte Volumen vergrößert. Im Unterschied zu den bekannten Filtern ist das Volumen des Filters kein Kreis-Zylinder und kein Kegelstumpf mit einem Kreis als Grundfläche sondern ein Zylinder oder ein Kegelstumpf oder Pyramidenstumpf mit einer Grundfläche, die aus vier Seiten besteht.

Vorteilhafterweise erstrecken sich die beiden Stützelemente frei in Längsrichtung des Stützkörpers. In diesem Fall sind die beiden Stützelemente nur durch den Rahmen und durch das Filterelement miteinander verbunden. Es können aber auch Querstreben zwischen den beiden Stützelementen angeordnet sein, die zum einen die Stabilität erhöhen und zum anderen das Befestigen mehrerer Filterelemente erleichtern. Die Querstreben verlaufen senkrecht zur Längsrichtung des Stützkörpers. Eine derartige Querstrebe kann auch im Bereich des dem Rahmen abgewandten Bodens des Filters angeordnet sein. Da derartige Querstreben die Fläche des Filterelements reduzieren, die von dem Medium durchströmt werden kann, ist es von Vorteil, auf derartige Querstreben so weit als möglich zu verzichten. Darüber hinaus können Längsstreben vorgesehen sein, die sich parallel oder unter einem Winkel zwischen 0° und 30° gegen die Längsrichtung erstrecken und das Filterelement zusätzlich stützen. Für die Längsstreben gilt entsprechendes wie für die Querstreben.

Die Stützelemente können an ihrem dem Rahmen zugewandten Ende dicker und/ oder breiter sein als an ihrem dem Rahmen abgewandten Ende. Breite und Dicke werden senkrecht zur Längsrichtung des Stützkörpers gemessen. Die Breite ist dabei wiederum senkrecht zur Dicke und bezeichnet die Länge der den Querschnitt des Filters senkrecht zur Längsrichtung begrenzenden, durch die Stützelemente gebildeten Seiten. Die Breite und/ oder die Dicke der Stützelemente kann sich vom Rahmen bis zu dem dem Rahmen abgewandten Ende der Stützelemente kontinuierlich reduzieren. Damit verkleinern sich die Querschnitte von dem der zentralen Öffnung zugewandten Ende der Stützelemente bis zu dem der zentralen Öffnung abgewandten Ende kontinuierlich. Ein derartiger Aufbau kann aus Gründen der Stabilität von Vorteil sein. Reduziert sich die Breite, so ergibt sich eine V-förmige Anordnung des Filterelements. Diese hat den Vorteil, dass der Teil des Mediums, der an den Seiten des Filterelements durch das Filterelement hindurchströmt, eine Geschwindigkeitskomponente in Längsrichtung des Filters aufweist. Je größer dieser Anteil des Mediums ist und je größer die Geschwindigkeitskomponente in Längsrichtung ist, um so kleiner ist der Strömungswiderstand.

Darüber hinaus kann die Breite der Stützelemente mit Ausnahme im Bereich des Bodens konstant sein. Dadurch ergibt sich eine U-förmige Anordnung des Filterelements. Ändert auch das Filterelement seine Breite nicht, so führt dies dazu, dass die Querschnitte über die Länge der Stützelemente mit Ausnahme an dem Ende, welches dem die zentrale Öffnung aufweisenden Ende abgewandt ist, gleich groß sind.

Ferner kann sich der Winkel zwischen der Längsrichtung des Stützkörpers und der nach innen weisenden Seite der Stützelemente unabhängig von ihrer Dicke über die Länge der Stützelemente ändern. Vorteilhafterweise sind die Innenseiten der Stützelemente parallel zur Längsrichtung des Filters. Der Winkel kann jedoch auch zwischen 0° und 30° betragen.

Vorteilhafterweise besteht der Boden des Filters zum größten Teil aus dem Filterelement. Die beiden Stützelement halten das Filterelement lediglich an zwei Seiten. Dies ermöglicht das Strömen des Mediums in Längsrichtung des Filters. Eine derartige Strömung sorgt für den geringsten Widerstand und damit für einen allenfalls geringen Druckabfall oder Druckverlust durch den Filter. Ein Ringspalt tritt in diesem Fall nicht auf.

Die beiden Stützelemente sind an ihrem dem Rahmen abgewandten Ende abgerundet. Die Form des Filterelements im Bereich des Boden hängt von der Form der Stützelemente an ihrem dem Rahmen abgewandten Ende ab. Eine abgerundete Form der Enden der Stützelemente hat den Vorteil, dass das Filterelement ebenfalls einen runden Verlauf aufweist und keine Kanten ausbildet. Dies begünstigt wiederum das Strömen des Mediums.

Nach einer vorteilhaften Ausgestaltung der Erfindung weisen bei den Querschnitten des Filters in den zur Längsrichtung des Filters senkrechten Ebenen die einander gegenüberliegenden Seiten jeweils die gleiche Länge und die gleiche Form auf. Dies führt zu einem symmetrischen Aufbau des Filters und erleichtert die Herstellung.

Nach einer weiteren vorteilhaften Ausgestaltung der Erfindung weisen die Stützelemente an den einander zugewandten Rändern Aufnahmen für das Filterelement auf. Dabei kann es sich um eine Nut, eine Rille oder eine sonstige Vertiefung handeln, in die das Filterelement eingeführt und befestigt wird.

Nach einer weiteren vorteilhaften Ausgestaltung der Erfindung besteht das Filtermaterial aus Drahtgewebe. Die Separation der Partikel von dem durchströmenden Medium erfolgt aufgrund der Siebwirkung des Drahtgewebes. Die Maschenweite des Drahtgewebes kann je nach Medium und Partikelgröße von 0,003 bis 10 mm betragen.

Nach einer weiteren vorteilhaften Ausgestaltung der Erfindung besteht der Stützkörper aus Kunststoff und ist damit leicht und kostengünstig herzustellen. Der Kunststoff muss so beschaffen sein, dass eine chemische Wechselwirkung mit dem Medium ausgeschlossen wird.

Nach einer weiteren vorteilhaften Ausgestaltung der Erfindung ist an dem Rahmen des Stützkörpers ein Ring angeordnet, der an seiner Außenseite die kreisrunde Außenkontur aufweist. Dieser Ring kann beispielsweise aus Metall bestehen. Ein Ring aus Metall hat gegenüber Kunststoff den Vorteil, dass er eine höhere Stabilität aufweist und daher mit einer größeren Pressspannung in den zylindrischen Hohlkörper oder eine Bohrung eingesetzt werden kann. Auf spezielle Vorkehrungen an der Innenseite des zylindrischen Hohlkörpers, beispielsweise eine Stufenbohrung oder eine Ringnut kann verzichtet werden. Durch die hohe Pressspannung wird ein Verschieben des Filters im zylindrischen Hohlkörper vermieden, ohne dass hierzu zusätzliche Hilfsmittel benötigt werden.

Weitere Vorteile und vorteilhafte Ausgestaltungen der Erfindung sind der nachfolgenden Beschreibung, der Zeichnung und den Ansprüchen zu entnehmen.

### Zeichnung

Ein Ausführungsbeispiel der Erfindung ist in der Zeichnung dargestellt und im folgenden näher beschrieben. Es zeigen:
- Figur 1: perspektivische Ansicht des Filters,
- Figur 2: Ansicht des Filters gemäß Figur 1 von unten,
- Figur 3: Seitenansicht des in ein Rohr eingesetzten Filters gemäß Figur 1, Aufsicht auf ein Stützelement des Filters,
- Figur 4: Seitenansicht des in ein Rohr eingesetzten Filters gemäß Figur 1, Aufsicht auf das Filterelement des Filters.

### Beschreibung des Ausführungsbeispiels

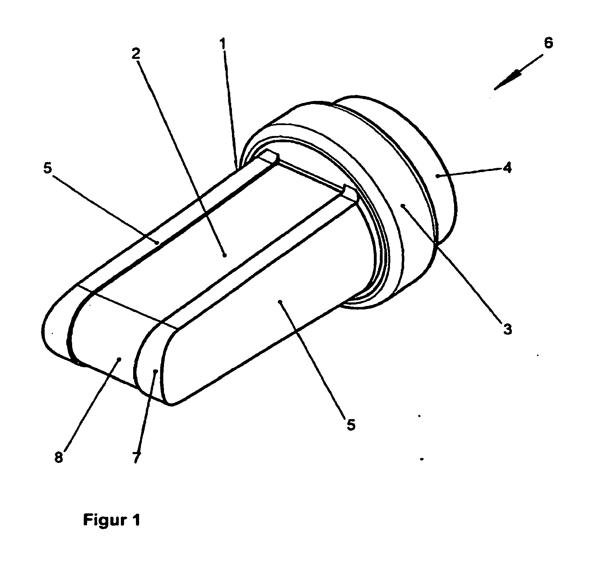

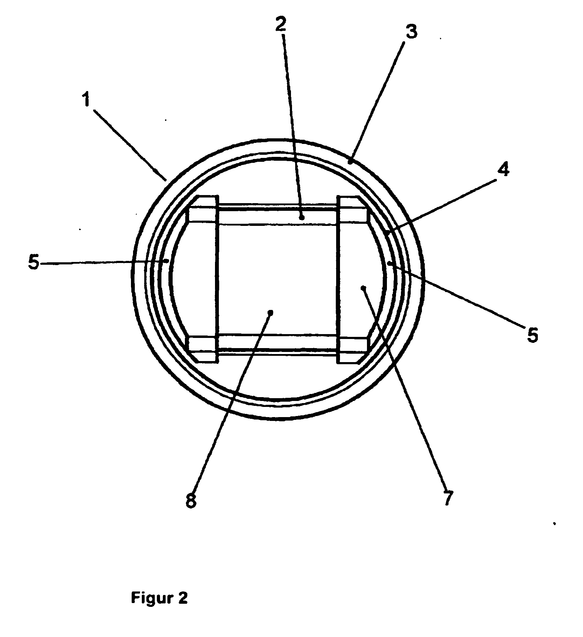

In den Figuren 1 und 2 ist ein Filter mit einem länglichen Stützkörper 1, einem Filterelement 2 und einem Ring 3 dargestellt. Der Stützkörper 1 besteht aus einem Rahmen 4 und zwei an dem Rahmen angeordneten Stützelementen 5. Der Rahmen 4 weist eine in der Zeichnung nicht erkennbare Öffnung auf. Seine Außenkontur ist rund. Auf die Außenkontur ist der Ring 3 aufgesetzt. Die beiden Stützelemente 5 sind formidentisch ausgebildet. An den beiden Stützelementen 5 und dem Rahmen 4 ist das Filterelement 2 befestigt. Die Längsrichtung des Filters ist in Figur 1 durch einen Pfeil 6 angedeutet. Der Rahmen 4 und der Ring 3 werden durch zwei parallele Ebenen begrenzt, die senkrecht zu der Längsrichtung 6 verlaufen. Die beiden Stützelemente erstrecken sich in Längsrichtung 6. Das Filterelement 2 besteht aus einem rechteckigen Streifen eines Drahtgewebes und bildet in dem Filter eine V-Form aus. Die dem Rahmen abgewandten Enden 7 der Stützelemente 5 sind abgerundet. Der dem Rahmen und der Öffnung abgewandte Boden 8 des Filters weist daher ebenfalls eine runde Form auf und wird ausschließlich durch das Filterelement 2 und die Enden 7 der Stützelemente 5 gebildet.

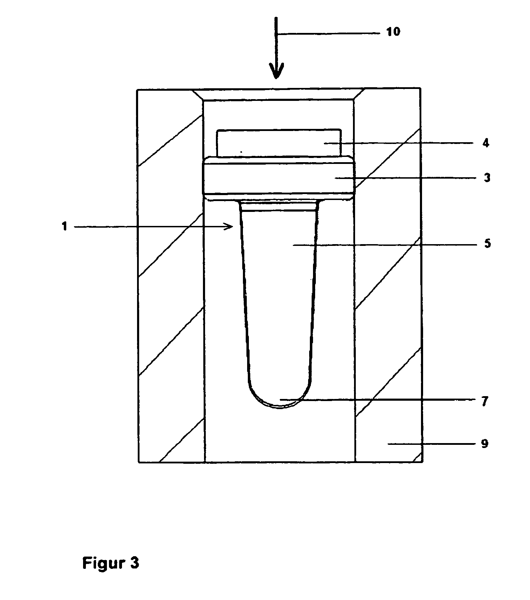

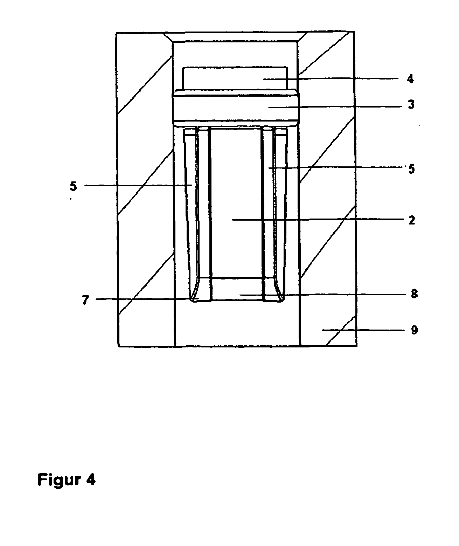

Die Figuren 3 und 4 zeigen den in ein Rohr 9 eingesetzten Filter gemäß Figuren 1 und 2 in Seitenansicht. Dabei zeigt Figur 3 eine Aufsicht auf eines der beiden Stützelemente 5 und Figur 4 die Aufsicht auf das Filterelement 2. Die Strömungsrichtung des Mediums ist in Figur 3 durch einen Pfeil 10 dargestellt. In den beiden Figuren ist erkennbar, dass der Filter über den Ring 3 in das Rohr 9 eingepresst ist und durch den Ring 3 ortsfest gehalten wird.

Sämtliche Merkmale der Erfindung können sowohl einzeln als auch in beliebiger Kombination miteinander erfindungswesentlich sein.

### Bezugszahlen

- 1: Stützkörper
- 2: Filterelement
- 3: Ring
- 4: Rahmen
- 5: Stützelement
- 6: Längsrichtung des Stützkörpers
- 7: dem Rahmen abgewandtes Ende des Stützelements
- 8: Boden
- 9: Rohr
- 10: Strömungsrichtung des Mediums

## Patentansprüche

1. Filter für flüssige und gasförmige Medien,
mit einem länglichen Stützkörper (1),
mit mindestens einem an dem Stützkörper (1) angeordneten Filterelement (2) aus einem Filtermaterial, welches kleine Filterelementöffnungen zum Durchströmen des Mediums aufweist,
mit einem eine kreisrunde Außenkontur und eine gegenüber den Filteröffnungen große zentrale Öffnung aufweisenden Rahmen (4) des Stützkörpers (1),
mit mindestens zwei an dem Rahmen (4) angeordneten Stützelementen (5), welche sich in Längsrichtung (6) des Stützkörpers (1) erstrecken, wobei das Filterelement (2) durch den Rahmen (4) und die beiden Stützelemente (5) gehalten ist,
wobei er mit einem vier Seiten aufweisenden Querschnitt des Filters im Bereich der Stützelemente (5) und des Filterelements (2) in den zur Längsrichtung des Stützkörpers (1) senkrechten Ebenen ausgestattet ist, wobei zwei der sich gegenüberliegenden Seiten durch die Stützelemente (5) und die beiden anderen sich gegenüberliegenden Seiten durch das Filterelement (2) gebildet werden,
wobei er mit einem der zentralen Öffnung abgewandten, für das Medium durchlässigen Boden (8) des Filters, welcher durch das Filterelement (2) gebildet wird, ausgestattet ist,
wobei das Filterelement als durchgängiger Streifen ausgebildet ist, der sich von dem Rahmen entlang der Seiten der Stützelemente bis zu dem dem Rahmen abgewandten Ende der Stützelemente und auf der anderen Seite der Stützelemente wieder zurück bis zum Rahmen erstreckt,
**dadurch gekennzeichnet**
**dass** die der zentralen Öffnung abgewandten Enden der Stützelemente abgerundet sind,
**dass** die Form des Filterelements im Bereich des Bodens von der Form der Stützelemente an ihrem dem Rahmen abgewandten Ende abhängt.
**dass** durch die abgerundete Form der Enden der Stützelemente das Filterelement ebenfalls einen runden Verlauf aufweist und keine Kanten ausbildet, welches das Strömen des Mediums begünstigt.

2. Filter nach Anspruch 1, **dadurch gekennzeichnet, dass** bei den Querschnitten die einander gegenüberliegenden Seiten jeweils die gleiche Länge und die gleiche Form aufweisen.

3. Filter nach Anspruch 2, **dadurch gekennzeichnet, dass** mindestens zwei einander gegenüberliegende Seiten nach außen gekrümmt sind.

4. Filter nach einem der vorhergehenden Ansprüche, **dadurch gekennzeichnet, dass** die Querschnitte über die Länge der Stützelemente (5) mit Ausnahme an dem Ende, welches dem die zentrale Öffnung aufweisenden Ende abgewandt ist, gleich groß sind.

5. Filter nach Anspruch 1, **dadurch gekennzeichnet, dass** sich die Querschnitte von dem der zentralen Öffnung zugewandten Ende der Stützelemente (5) bis zu dem der zentralen Öffnung abgewandten Ende kontinuierlich verkleinern.

6. Filter nach Anspruch 5, **dadurch gekennzeichnet, dass** die durch das Filterelement gebildeten Seiten der Querschnitte gleich groß sind.

7. Filter nach einem der vorhergehenden Ansprüche, **dadurch gekennzeichnet, dass** die durch das Filterelement gebildeten Seiten der Querschnitte einen geradlinigen Verlauf aufweisen.

8. Filter nach einem der vorhergehenden Ansprüche, **dadurch gekennzeichnet, dass** die Stützelemente (5) mit Ausnahme ihres der zentralen Öffnung zugewandten Endes ausschließlich über das Filterelement (2) miteinander verbunden sind.

9. Filter nach einem der vorhergehenden Ansprüche, **dadurch gekennzeichnet, dass** die Stützelemente (5) an den einander zugewandten Rändern Aufnahmen für das Filterelement (2) aufweisen.

10. Filter nach einem der vorhergehenden Ansprüche, **dadurch gekennzeichnet, dass** das Filtermaterial aus einem Drahtgewebe besteht.

11. Filter nach einem der vorhergehenden Ansprüche, **dadurch gekennzeichnet, dass** der Stützkörper (1) aus Kunststoff besteht.

12. Filter nach einem der vorhergehenden Ansprüche, **dadurch gekennzeichnet, dass** an dem Rahmen (4) des Stützkörpers (1) ein Ring (3) angeordnet ist, der an seiner Außenseite die kreisrunde Außenkontur aufweist.

13. Filter nach Anspruch 12, **dadurch gekennzeichnet, dass** der Ring (3) aus Metall besteht.

## Claims

1. Filter for liquids and gases,
with an elongated supporting structure (1)
with at least one filter element (2) at the supporting structure (1) made of a filter material that has small filter element openings for the medium to flow through
with a frame (4) of the supporting structure (1) exhibiting a circular outer contour and large central opening compared to the filter openings,
with at least two supports (5) located at the frame (4) that extend in the longitudinal direction (6) of the supporting structure (1),
whereby the filter element (2) is held by the frame (4) and the two supports (5),
whereby
it has a filter cross-section with four sides in the area of the supports (5) and the filter element (2) in the planes perpendicular to the longitudinal direction of the supporting structure (1), whereby two of the opposing sides are formed by the supports (5) and the other two opposing sides are formed by the filter element (2),
whereby it has a base (8) of the filter that is formed by the filter element (2) and that faces away from the central opening and is permeable to the medium,
whereby the filter element is designed as a uniform strip that extends from the frame along the sides of the supports to the end of the supports that faces away from the frame and continues along the other side of the supports back to the frame
**characterised in that**,
the ends of the supports facing away from the central opening are rounded,
that the form of the filter element in the area of the base depends on the form of the supports at the end facing away from the frame, that due to the rounded form of the ends of the supports, the filter element also has a round shape and does not form edges, which favours the flow of the medium.

2. Filter according to claim 1, **characterised in that** the opposing sides in the cross-sections each have the same length and the same shape.

3. Filter according to claim 2, **characterised in that** at least two opposing sides are curved outwards.

4. Filter according to one of the previous claims, **characterised in that** the cross-sections are of the same size along the length of the supports (5) with the exception of the end that faces away from the end with the central opening.

5. Filter according to claim 1, **characterised in that** the cross-sections of the end of the supports (5) facing the central opening become continuously smaller up to the end facing away from the central opening.

6. Filter according to claim 5, **characterised in that** the sides of the cross-sections formed by the filter element are of the same size.

7. Filter according to one of the previous claims, **characterised in that** the sides of the cross-sections formed by the filter element run straight.

8. Filter according to one of the previous claims, **characterised in that** the supports (5) are only connected to one another via the filter element (2) with the exception of their end facing the central opening.

9. Filter according to one of the previous claims, **characterised in that** the supports (5) have mounts for the filter element (2) on the edges that face one another.

10. Filter according to one of the previous claims, **characterised in that** the filter material is composed of a wire mesh.

11. Filter according to one of the previous claims, **characterised in that** the supporting structure (1) is made of plastic.

12. Filter according to one of the previous claims, **characterised in that** a ring (3) is arranged on the frame (4) of the supporting structure (1), the exterior of which has a circular outer contour.

13. Filter according to claim 13, **characterised in that** the ring (3) is made of metal.

## Revendications

1. Filtre pour milieux liquides et gazeux, présentant
un corps-support allongé (1),
au moins un élément filtrant (2) fait d'un matériau filtrant pourvu de petites ouvertures filtrantes permettant le passage du fluide, l'élément filtrant étant disposé au niveau du corps-support (1),
un cadre (4) de corps-support (1) doté d'une forme extérieure ronde et d'une ouverture centrale de grande taille par rapport aux ouvertures filtrantes,
au moins deux éléments d'appui (5) disposés sur le cadre (4) et s'étendant dans le sens longitudinal (6) du corps-support (1),
l'élément filtrant (2) étant maintenu en place par le cadre (4) et les deux éléments d'appui (5),
ledit filtre étant doté d'une section à quatre côtés au niveau des éléments d'appui (5) et de l'élément filtrant (2) dans les plans perpendiculaires au sens longitudinal du corps-support (1), deux des côtés se faisant face étant formés par les éléments d'appui (5) et les deux autres côtés se faisant face étant formés par l'élément filtrant (2),
ledit filtre étant doté d'un fond (8) laissant passer le fluide, situé à l'opposé de l'ouverture centrale et formé par l'élément filtrant (2),
ledit élément filtrant présentant la forme d'une bande continue qui s'étend le long des éléments d'appui, partant du cadre pour aller jusqu'à l'extrémité située à l'opposé du cadre des éléments d'appui, et remontant jusqu'au cadre de l'autre côté des éléments d'appui,
**caractérisé en ce que**
les extrémités des éléments d'appui situées à l'opposé de l'ouverture centrale sont arrondies,
la forme de l'élément filtrant au niveau du fond dépend de la forme des éléments d'appui au niveau de leur extrémité située à l'opposé du cadre, l'élément filtrant présente également une forme ronde et aucune arête en raison de la forme arrondie des extrémités des éléments d'appui, ce qui facilite le passage du fluide.

2. Filtre selon la revendication 1, **caractérisé en ce qu'**au niveau des sections, les côtés se faisant face présentent respectivement une longueur et une forme identiques.

3. Filtre selon la revendication 2, **caractérisé en ce qu'**au moins deux côtés se faisant face sont courbés vers l'extérieur.

4. Filtre selon l'une quelconque des revendications précédentes, **caractérisé en ce que** les sections sont de taille identique sur toute la longueur des éléments d'appui (5), à l'exception de l'extrémité qui est située à l'opposé de celle présentant l'ouverture centrale.

5. Filtre selon la revendication 1, **caractérisé en ce que** les sections de l'extrémité des éléments d'appui (5) située au niveau de l'ouverture centrale diminuent de façon continue jusqu'à l'extrémité située à l'opposé de l'ouverture centrale.

6. Filtre selon la revendication 5, **caractérisé en ce que** les côtés des sections formés par l'élément filtrant sont de taille identique.

7. Filtre selon l'une quelconque des revendications précédentes, **caractérisé en ce que** les côtés des sections formés par l'élément filtrant présentent une forme rectiligne.

8. Filtre selon l'une quelconque des revendications précédentes, **caractérisé en ce que** les éléments d'appui (5) sont reliés entre eux uniquement par l'élément filtrant (2), excepté au niveau de leur extrémité située au niveau de l'ouverture centrale.

9. Filtre selon l'une quelconque des revendications précédentes, **caractérisé en ce que** les éléments d'appui (5) présentent, sur les bords tournés l'un vers l'autre, des fixations pour l'élément filtrant (2).

10. Filtre selon l'une quelconque des revendications précédentes, **caractérisé en ce que** le matériau filtrant est fait d'un tissu métallique.

11. Filtre selon l'une quelconque des revendications précédentes, **caractérisé en ce que** le corps-support (1) est fait de matière plastique.

12. Filtre selon l'une quelconque des revendications précédentes, **caractérisé en ce qu'**un anneau (3) est disposé au niveau du cadre (4) du corps-support (1), la face extérieure de cet anneau présentant une forme extérieure ronde.

13. Filtre selon la revendication 13, **caractérisé en ce que** l'anneau (3) est fait de métal.
